# EUROPEAN PATENT SPECIFICATION

(11) **EP 3 071 851 B1**
(45) Date of publication and mention of the grant of the patent: **02.10.2019**
(21) Application number: 14863168.2
(22) Date of filing: 11.11.2014
(51) Int. Cl.: F16C 35/06, F16C 33/66, F16H 57/02, F16H 57/04

(54) **GEARBOX**
GETRIEBE
BOÎTE DE VITESSES

(30) Priority: 22.11.2013 SE 1351391
(43) Date of publication of application: 28.09.2016
(73) Proprietor: Scania CV AB, 151 87 Södertälje (SE)
(72) Inventor: GUSTAFSSON, Nichlas, S-611 30 Nyköping (SE); SLAPAK, Dieter, S-151 47 Södertälje (SE); FORSBERG, Jörgen, S-129 49 Hägersten (SE); DAHLBÄCK, Mårten, S-181 61 Lidingö (SE)
(74) Representative: Scania CV AB
(86) International application number: PCT/SE2014/051333
(87) International publication number: WO 2015/076722

(56) References cited:
- EP-A1- 1 837 559
- EP-A1- 2 360 047
- FR-A1- 2 927 280
- GB-A- 2 241 994
- US-A- 2 147 146
- US-A- 5 788 210
- US-A1- 2003 099 417
- US-A1- 2003 114 263
- US-A1- 2009 028 483

## Description

### FIELD OF THE INVENTION AND PRIOR ART

The present invention relates to a gearbox according to claim 1.

In a motor vehicle gearbox, it is common for the input shaft of the gearbox to be rotatably mounted on the gearbox housing with the help of a rolling bearing, in the form of a conical rolling bearing made of steel, wherein such a rolling bearing is mounted in a bearing seat of the gearbox housing with an interference fit between the outer ring of the bearing and the bearing seat. Where the gearbox housing is made of aluminium or another material with an expansion coefficient other than that of steel, the interference fit between the outer ring of the bearing and the bearing seat may loosen when the temperature rises, because of the divergent expansion coefficients of the gearbox housing material and the rolling bearing steel material, so that the bearing's outer ring may rotate in relation to the bearing seat. This may in turn lead to abrasion damage to the bearing's outer ring and the bearing seat and a gap between the input shaft and the gearbox housing. In order to prevent such a rotation of the bearing's outer ring in relation to the bearing seat, according to prior art, an O-ring or a wedge is arranged between the outer ring of the bearing and the bearing seat. One disadvantage of such a solution is, however, that the insertion of an O-ring or wedge between the outer ring of the bearing and the bearing seat makes it more difficult to fit the bearing's outer ring in the bearing seat. With the use of a wedge which engages in a groove a corresponding groove in the bearing seat, the outer ring of the bearing must be arranged in a predetermined rotational position in relation to the bearing seat when the bearing seat is fitted, in order to allow for the insertion of the wedge between the bearing's outer ring and the bearing seat, which may be difficult and time consuming to achieve. With the use of an O-ring which is arranged inside a groove in the outer ring of the bearing or in the bearing seat, there is a risk that the O-ring may be cut to pieces between the outer ring of the bearing and the bearing seat when the bearing's outer ring is pressed into the bearing seat, so that there is a risk that the O-ring may end up between the rolling bearing and the bearing seat's bottom surface, thus preventing the outer ring of the bearing from assuming a correct end position, abutting against the bottom surface of the bearing seat. Further, an O-ring which is cut to pieces will not fulfil the intended rotation-preventing function.

GB 2241994 A shows a rear axle gear unit of a motor vehicle. A shaft is mounted by means of a double-row rolling bearing in a throughbore of a housing. The rolling bearing has an outer race ring with two outer raceways and a radially outwardly extending flange. A cover is secured with an annular flange on an end face of the flange. At least one oil hole is incorporated between the two outer raceways. To ensure that the raceway can be positioned rigidly in the throughbore, the outer race ring has an outer curved surface portion adjoining the outside end face, on which an inner surface of a centering projection of the cover is tightly fitted. Each oil hole is disposed between the end face and the portion and opens into a substantially radially extending connecting passage disposed between the flange and the annular flange. US 2147146 A1 shows a straight-type double reduction automotive drive axle comprising means for lubricating a rotatable member or part thereof located above the normal level of the lubricant in the lubricant reservoir in the axle housing at all speeds within the range of operation of the vehicle.

### OBJECTIVE OF THE INVENTION

The objective of the present invention is to achieve a novel and advantageous solution to the problem explained above.

### SUMMARY OF THE INVENTION

According to the present invention, the objective mentioned above is achieved with the help of a gearbox having the characteristics defined in claim 1.

The gearbox according to the invention comprises:
- a gearbox housing;
- a gearbox housing;
- a rotatable shaft, extending horizontally or at least in a substantially horizontal direction;
- a rolling bearing, via which said shaft is rotatably mounted in the gearbox housing and featuring:
   ▪ an outer ring of the bearing fitted in a bearing seat arranged in the gearbox housing, wherein such an outer ring of the bearing features, at a first axial end, a first edge surface abutting against a supporting surface in the bearing seat and at an opposite second axial end, a second edge surface,
   ▪ an inner ring of the bearing attached to said shaft, and
   ▪ several rolling bodies arranged between the bearing's outer ring and the bearing's inner ring;
- a mounting plate, which abuts against the second edge surface of the bearing's outer ring and is screwed onto the gearbox housing, in order to thus keep the outer ring of the bearing biased between the mounting plate and said supporting surface in the bearing's seat; and
- a reservoir for receipt of gearbox oil arranged in the gearbox housing on the outside of and above the bearing seat, wherein the mounting plate forms an end wall of such a reservoir, and a groove for leading gearbox oil from the reservoir into the bearing seat is arranged in the bearing seat.

The mounting plate ensures that the outer ring of the bearing is maintained in an axial direction, pressed against its supporting surface in the bearing seat, so that the friction force between the outer ring of the bearing and said supporting surface will counteract a rotation of the outer ring of the bearing in relation to the bearing seat, even if the interference fit between the bearing's outer ring and the bearing seat were to loosen at rising temperatures. The mounting plate also contributes to forming a reservoir for gearbox oil above the bearing seat, whereby the required lubrication of the rolling bearing is ensured by way of the gearbox oil being led via a groove in the bearing seat into the bearing seat from said reservoir. Accordingly, an effective lubrication of the rolling bearing may be achieved in a simple way, without the need to pump gearbox oil into the bearing seat with the help of an oil pump.

One embodiment of the invention is characterised in that:
- said bearing seat constitutes a first bearing seat of the gearbox housing, wherein a second bearing seat for a rolling bearing is arranged inside the gearbox housing below the first bearing's seat, and
- a groove for leading gearbox oil from the first bearing seat to the second bearing seat is arranged inside the first bearing seat. Thus, a lubrication of the rolling bearing arranged in the second bearing seat may be ensured in a simple way with the help of gearbox oil from said reservoir.

According to another embodiment of the invention, the mounting plate comprises axially resilient mounting sections, which via the mounting plate abut against the outer ring of the bearing, and which are distributed circumferentially around the second edge surface of the outer ring of the bearing. With the help of these axially resilient mounting sections, the mounting plate obtains a good ability to absorb axially acting forces, which are transmitted from said shaft, via the bearing's inner ring and the rolling bodies to the bearing's outer ring.

According to another embodiment of the invention, said mounting sections of the mounting plate are biased against the second edge surface of the outer ring of the bearing in order to keep the outer ring of the bearing biased between the mounting plate and said supporting surface in the bearing seat, under the impact of a resilient force exerted by the mounting plate's mounting sections. This means it is possible to ensure that the mounting plate constantly exerts an axial pressure force against the outer ring of the bearing, which force is evenly distributed circumferentially around the second edge surface of the bearing's outer ring.

According to another embodiment of the invention, said reservoir is open at the top. Since it is open at the top, the reservoir is able to receive gearbox oil, which under the action of rotating cogwheels inside the gearbox housing is splashed up from an oil sump at the bottom of the gearbox housing.

Other advantageous features of the gearbox according to the invention are set out in the non-independent claims and the description below.

### BRIEF DESCRIPTION OF THE DRAWINGS

The invention is described below with the help of example embodiments, with reference to the enclosed drawings. Displayed in:
- Fig. 1: is a perspective view of a part of a gearbox, according to one embodiment of the present invention, with a first rolling bearing, firmly pressed into a first bearing seat with the help of a mounting plate, and a second rolling bearing arranged in a second bearing seat,
- Fig. 2: is a perspective view corresponding to Fig. 1, but with the mounting plate and the second rolling bearing omitted,
- Fig. 3: is a perspective view corresponding to Fig. 1, but with the mounting plate and the two rolling bearings omitted,
- Fig. 4: is a perspective view corresponding to Fig. 3, but from a different angle,
- Fig. 5: is a vertical longitudinal section through the gearbox section displayed in Fig. 1, and a rotatably mounted shaft inside such a gearbox section,
- Fig. 6: is a longitudinal section corresponding to Fig. 5, but with said shaft and the second rolling bearing omitted,
- Fig. 7: is a horizontal section according to the line VII-VII in Fig. 6, and
- Fig. 8: is a perspective view of the mounting plate of the gearbox section displayed in Fig. 1.

### DETAILED DESCRIPTION OF EMBODIMENTS ACCORDING TO THE INVENTION

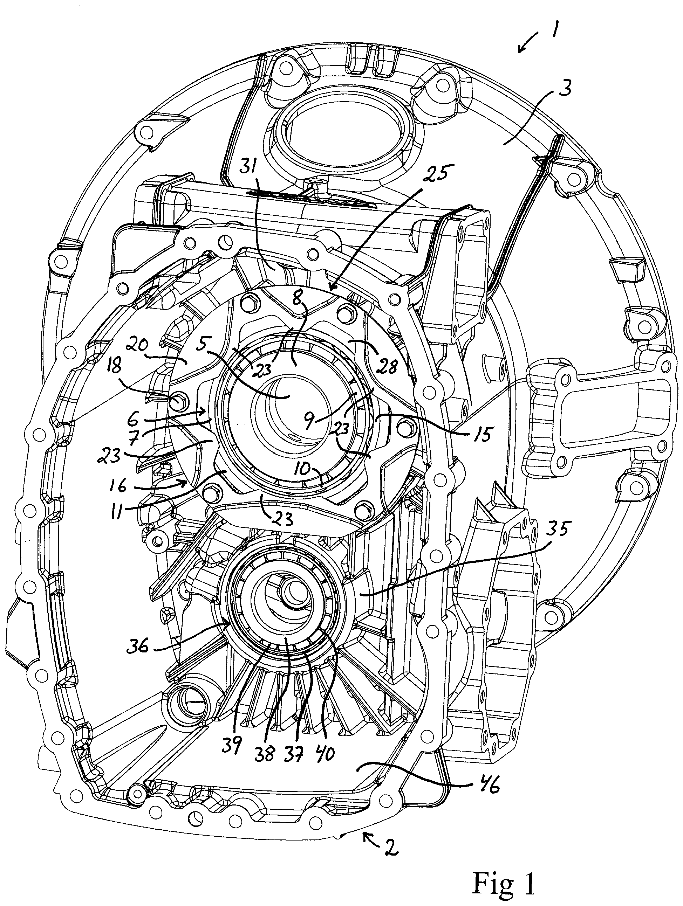

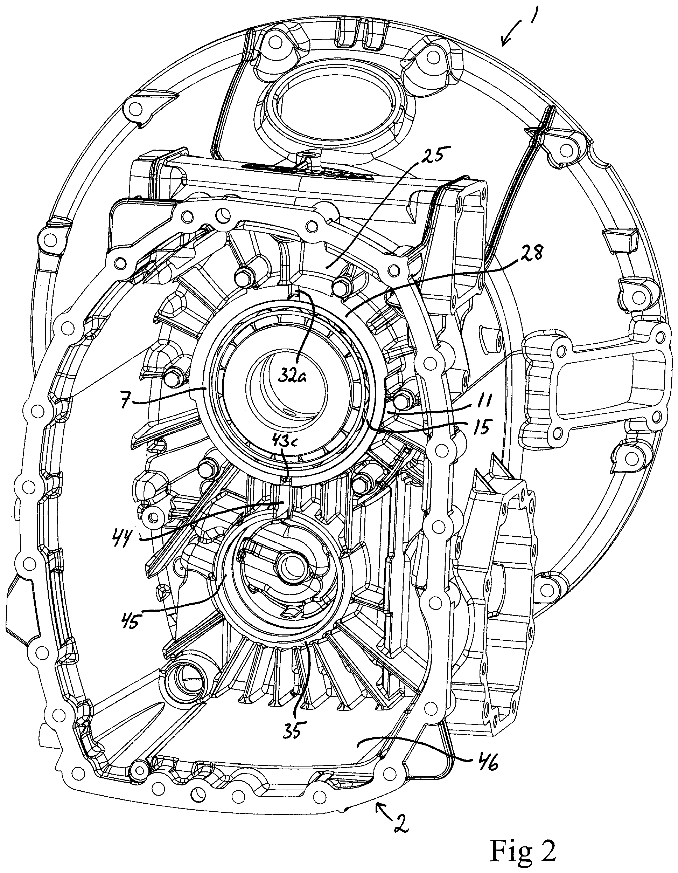

In Figs. 1-7 a section 1 of a gearbox according to one embodiment of the present invention is displayed. The illustrated section constitutes the part of the gearbox which is intended to face an engine connected to the gearbox, e.g. in the form of a combustion engine of a motor vehicle. The gearbox comprises an outer gearbox housing 2, which is preferably made of aluminium. Figs. 1-7 show only an end portion of the gearbox housing 2. In the illustrated example, the gearbox housing 2 comprises an external cover 3, which is intended to face said engine and intended to house a part of a clutch arranged between the engine and the gearbox.

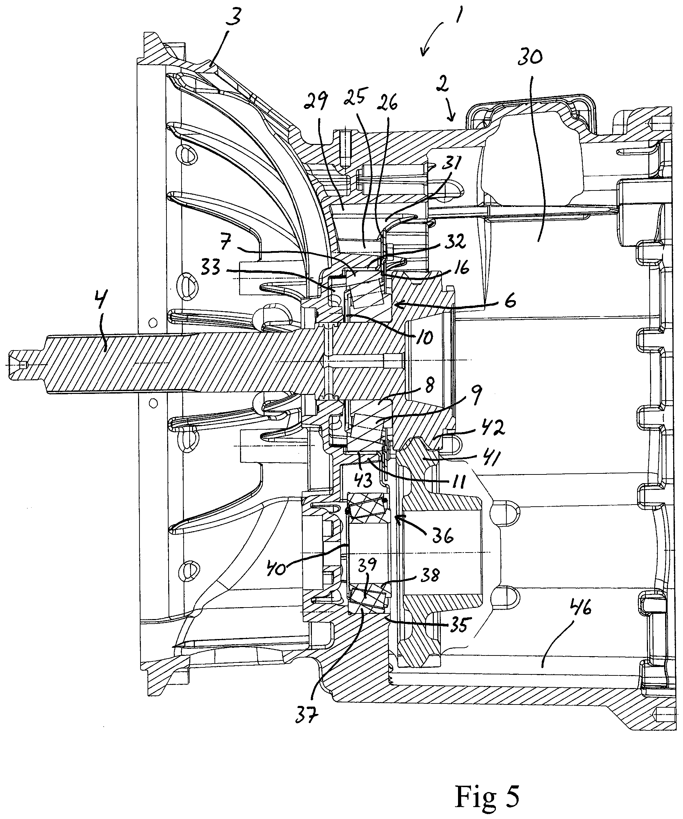

The gearbox comprises an input shaft 4 (see Fig. 5) extending horizontally or at least substantially horizontally through an opening 5 into the gearbox housing 2. For purposes of clarity, the input shaft 4 is not drawn in the other figures. The input shaft 4 is rotatably mounted in the gearbox housing 2 via a rolling bearing 6. The rolling bearing 6 is made of steel and comprises, in a conventional manner, an outer ring 7 of the bearing, an inner ring 8 of the bearing, which is rotatably connected with the input shaft 4, several rolling bodies 9 arranged between the bearing's outer ring 7 and the bearing's inner ring 8, and a holder 10 for the rolling bodies 9. In the illustrated example, the rolling bearing 6 is a conical rolling bearing with rolling bodies 9 in the form of rolls. The rolling bearing 6 could, however, also consist of a ball bearing, with rolling bodies consisting of balls.

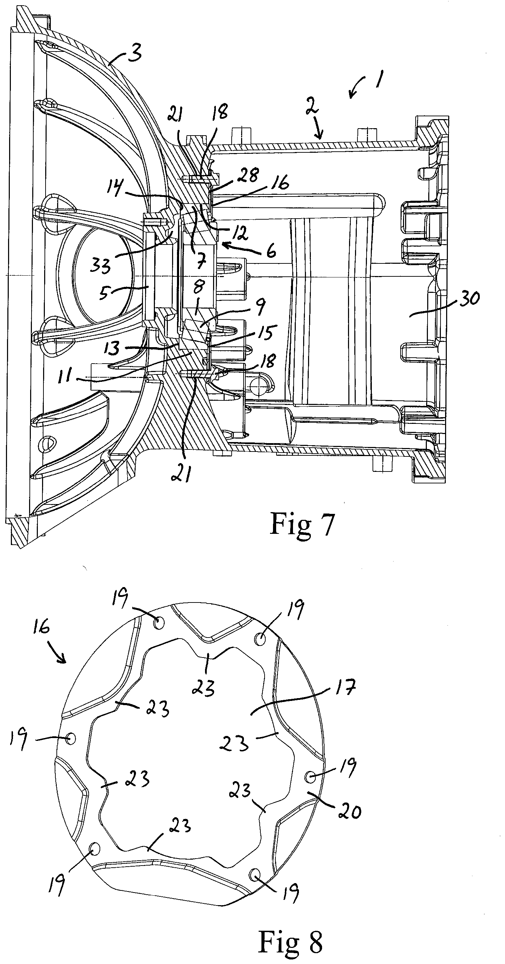

The outer ring 7 of the bearing is fitted with an interference fit into a bearing seat 11 arranged inside a gearbox housing 2, which bearing seat hereafter is referred to as a first bearing seat. The mantle surface of the bearing's outer ring abuts against a cylindrical internal wall 12 of the first bearings seat 11, as illustrated in Fig. 7. At a first axial end, the bearing outer ring 7 has an annular first edge surface 13, abutting against an annular supporting surface 14 in the first bearing seat 11, and at an opposite second axial end, the bearing outer ring has an annular second edge surface 15. A mounting plate 16 abuts against the second edge surface 15 of the bearing's outer ring and is screwed onto the gearbox housing 2, in order to thus keep the bearing outer ring 7 biased between the mounting plate 16 and said supporting surface 14 in the first bearing seat 11. The mounting plate 16 is annular and has a central opening 17 (see Fig. 8), through which the input shaft 4 extends. The mounting plate 16 is arranged on the inside of the gearbox housing 2.

In the illustrated example the mounting plate 16 is screwed onto the gearbox housing 2 with the help of a number of screws 18, which are distributed around the central opening 17 of the mounting plate. Each of the screws 18 extends through a hole 19 (see Fig. 8) in an annular base section 20 of the mounting plate 16, and is screwed into a threaded hole 21 in the gearbox housing 2, wherein the screw head of the screw 18 abuts against the base section 20 of the mounting plate.

The mounting plate 16 is advantageously equipped with axially resilient mounting sections 23 (see Figs. 1 and 8), via which the mounting plate 16 abuts against the outer ring 7 of the bearing, and which are distributed circumferentially around the second edge surface 15 of the bearing's outer ring. These mounting sections 23 are fixedly connected to the mounting plate's base section 20, and extend radially inwards from the base section 20. The mounting sections 23 form protrusions in the central opening 17 of the mounting plate 16, and are biased against the second edge surface 15 of the outer ring of the bearing, in order to keep the outer ring 7 of the bearing biased between the mounting plate 16 and said supporting surface 14 in the first bearing seat 11, under the impact of a resilient force exerted by the mounting plate's mounting sections 23.

The mounting plate 16 is made of metal, preferably steel, and its base section 20 is suitably embossed to provide the mounting plate with increased strength.

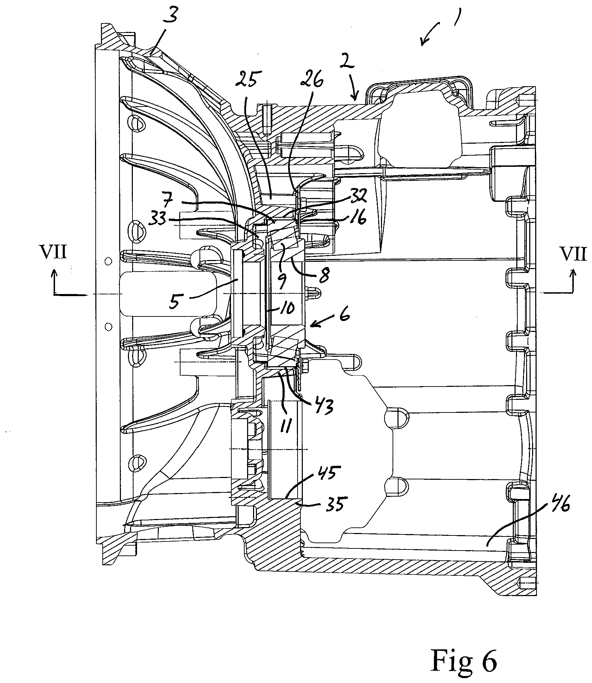

A reservoir 25 for receipt of gearbox oil is arranged in the gearbox housing 2 on the outside of, and above, the first bearing seat 11. The mounting plate 16 forms an end wall 26 of this reservoir 25, as illustrated in Figs. 5 and 6. The reservoir 25 is otherwise defined by walls that are integrated in the gearbox housing 2. The first bearing seat 11 has an edge surface 28 facing the mounting plate 16, wherein the mounting plate 16 is snug against this edge surface 28, so that gearbox oil which has accumulated in the reservoir 25 is prevented from trickling out of the reservoir via the contact surfaces between the first bearing seat 11 and the mounting plate 16. The reservoir 25 is open at the top, and the compartment 29 directly above the reservoir is connected with the other compartment 30 inside the gearbox housing 2, via an opening 31 directly above the mounting plate 16, as illustrated in Figs. 1 and 5.

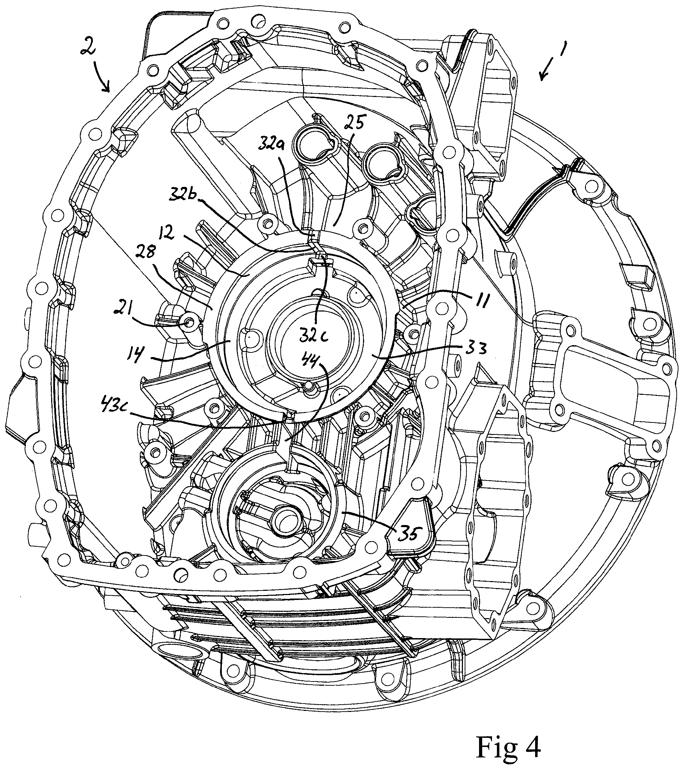

A groove 32 (see Figs. 4-6) for leading gearbox oil out of the reservoir 25 and into the first bearing seat 11 is arranged in the first bearing seat. Such a groove 32 comprises:
- a first section 32a, extending in a radial direction over the abovementioned edge surface 28 of the first bearing seat 11,
- a second section 32b, connected with the first section 32a, extending axially along the internal wall 12 of the first bearing seat 11, and
- a third section 32c connected with the second section 32b, extending radially over the abovementioned supporting surface 14 in the first bearing seat 11.

The first groove section 32a could be replaced with a corresponding groove on the inside of the mounting plate 16.

In the illustrated embodiment, the third groove section 32c debouches in a compartment 33 for gearbox oil at the bottom of the first bearing seat 11. The groove 32 is accordingly adapted to lead gearbox oil from the reservoir 25 to such a compartment 33. From such a compartment 33, gearbox oil may penetrate between the outer ring 7 of the bearing and the inner ring 8 of the bearing, for lubrication of the contact surfaces between the latters and the rolling bodies 9.

In the illustrated embodiment, a second bearing seat 35 for a ball bearing 36 is arranged in the gearbox housing 2, below the first bearing seat 11. A countershaft (not displayed) of the gearbox is rotatably mounted in the gearbox housing 2 via such a ball bearing 36. The ball bearing 36 is made of steel and comprises, in a conventional manner, an outer ring 37 of the bearing, an inner ring 38 of the bearing, which is rotatably connected with the countershaft, several rolling bodies 39 arranged between the bearing's outer ring 37 and the bearing's inner ring 38, and a holder 40 for the rolling bodies 39. The bearing's outer ring 37 is fitted with an interference fit into the second bearing seat 35. In the illustrated example, the rolling bearing 36 is a conical rolling bearing with rolling bodies 39 in the form of rolls. The rolling bearing 36 could, however, also consist of a ball bearing with rolling bodies consisting of balls.

In Fig. 5, a cogwheel 41 is displayed, arranged on said countershaft and engaged with a cogwheel 42 arranged on the input shaft 4. One or several additional cogwheels are also arranged on the countershaft, which are not, however, displayed in the figures.

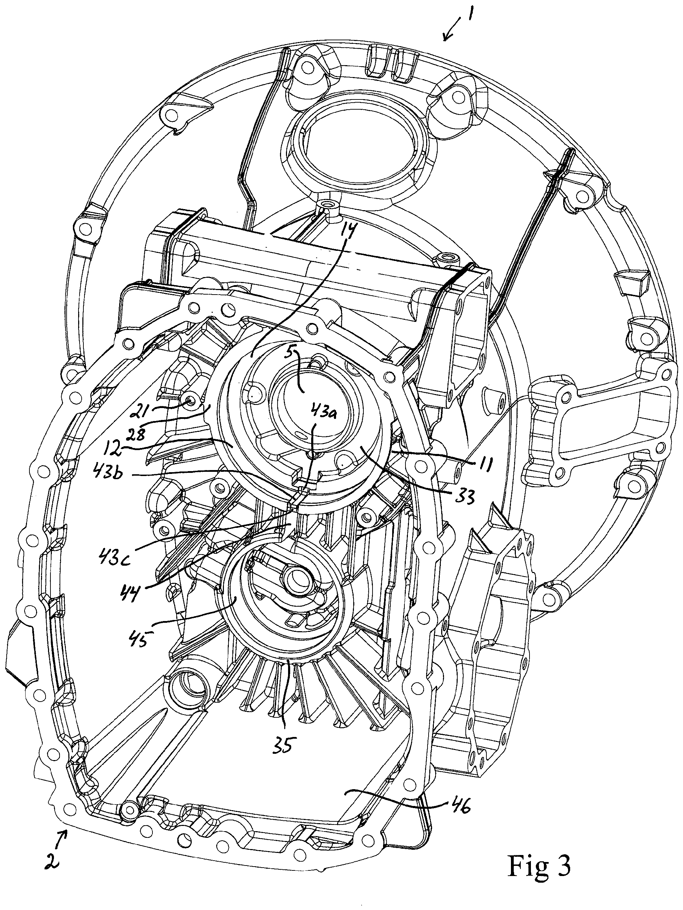

A groove 43 (see Figs. 3-6) for leading gearbox oil from the first bearing seat 11 to the second bearing seat 35 is arranged in the first bearing seat 11. Such a groove 43 comprises:
- a first section 43a, extending in a radial direction over the abovementioned edge surface 14 of the first bearing seat 11,
- a second section 43b connected with the first section 43a, extending axially along the internal wall 12 of the first bearing seat 11, and
- a third section 43c connected with the second section 43b, extending radially over the edge surface 28 of the first bearing seat 11, facing the mounting plate 16.

The third groove section 43c could be replaced with a corresponding groove on the inside of the mounting plate 16.

In the illustrated example, the first groove section 43a is connected, at its upstream end, to the abovementioned compartment 33 for gearbox oil at the bottom of the first bearing seat 11, while the third groove section 43c debouches into a compartment 44 of the gearbox housing 2, located between the first bearing seat 11 and the second bearing seat 35, and extending through a cylindrical wall 45 of the second bearing seat 35. Via the compartment 44, the gearbox oil from the first bearing seat 11 may thus come into contact with the rolling bearing 36, arranged in the second bearing seat 35.

The lower part of the gearbox housing 2 forms an oil sump 46, intended to contain gearbox oil, wherein the lower parts of the cogwheels 41 arranged on the countershaft of the gearbox are intended to be immersed in the gearbox oil received in the oil sump 46. When such cogwheels 41 rotate, they will splash gearbox oil into the internal compartment 30 in the gearbox housing 2 above the oil sump 46, and a part of this gearbox oil will splash into the reservoir 25 via the opening 31, above the mounting plate 16, and accumulate in the reservoir. From the reservoir 25, the gearbox oil then flows via the groove 32 into the first bearing seat 11. The gearbox oil may then, via the groove 43 and the compartment 44 above the second bearing seat 35, flow on into the second bearing seat, and subsequently flow back down into the oil sump 46.

The gearbox according to the invention is especially intended to be used in a heavy goods vehicle, such as a bus, tractor or truck.

The invention is not limited in any way to the embodiments described above, but numerous possible modifications thereof should be obvious to a person skilled in the area, without such person departing from the invention as defined by the appended claims.

## Claims

1. Gearbox comprising:
- a gearbox housing (2), preferably made of aluminium;
- a rotatable shaft (4), extending horizontally;
- a rolling bearing (6), via which said shaft (4) is rotatably mounted in the gearbox housing (2), and which features:
▪ an outer ring (7) of the bearing (6), fitted in a bearing seat (11) for the roller bearing (6), the bearing seat (11) being arranged in the gearbox housing (2), wherein such an outer ring (7) of the bearing features, at a first axial end, a first edge surface (13) abutting against a supporting surface (14) in the bearing seat (11), and a second edge surface (15) at an opposite second axial end,
▪ an inner ring (8) of the bearing (6), attached to said shaft (4), and
▪ several rolling bodies (9) arranged between the bearing's outer ring (7) and the bearing's inner ring (8);
wherein:
- a mounting plate (16) abuts against the second edge surface (15) of the bearing's outer ring and is screwed onto the gearbox housing (2) in order to thus keep the outer ring (7) of the bearing biased between the mounting plate (16) and said supporting surface (14) in the first bearing seat (11),
- a reservoir (25) for receipt of gearbox oil is arranged in the gearbox housing (2),on the outside of and above the bearing seat (11), wherein the mounting plate (16) forms an end wall (26) of such a reservoir (25), and
- a groove (32) for leading gearbox oil from said reservoir (25) into the bearing seat (11) is arranged in the bearing seat.

2. Gearbox according to claim 1, wherein the bearing seat (11) features an edge surface (28) facing the mounting plate (16), wherein the mounting plate (16) is snug against such an edge surface (28).

3. Gearbox according to claim 2, wherein said groove (32) comprises:
- a first section (32a), extending in a radial direction over the abovementioned edge surface (28) of the first bearing seat (11),
- a second section (32b), connected with the first section (32a), extending axially along the internal wall (12) of the first bearing seat (11), and
- a third section (32c) connected with the second section (32b), extending radially over the abovementioned supporting surface (14) in the first bearing seat (11).

4. Gearbox according to any of claims 1-3, wherein said groove (32) is connected to a compartment (33) for gearbox oil at the bottom of the bearing seat (11), in order to lead gearbox oil from said reservoir (25) to such a compartment (33).

5. Gearbox according to any of claims 1-4, wherein said shaft (4) constitutes an input shaft of the gearbox (1).

6. Gearbox according to any of claims 1-5, wherein said rolling bearing (6) is a conical rolling bearing.

7. Gearbox according to any of claims 1-6, wherein the mounting plate (16) comprises axially resilient mounting sections (23), via which the mounting plate (16) abuts against the outer ring (7) of the bearing, and which are distributed circumferentially around the second edge surface (15) of the bearing's outer ring.

8. Gearbox according to claim 7, wherein said mounting sections (23) of the mounting plate (16) are biased toward the second edge surface (15), in order to keep the outer ring (7) of the bearing biased between the mounting plate (16) and said supporting surface (14) in the bearing seat (11), under the impact of a resilient force exerted by the mounting plate's mounting sections (23).

9. Gearbox according to claim 7 or 8, wherein the mounting plate (16) comprises an annular base section (20), via which the mounting plate (16) is screwed onto the gearbox housing (2), wherein said mounting sections (23) are fixedly connected with the base section (20) and extend radially inwards from the base section (20).

10. Gearbox according to any of claims 1-9, wherein:
- said bearing seat (11) constitutes a first bearing seat of the gearbox housing (2), wherein a second bearing seat (35) for a rolling bearing (36) is arranged inside the gearbox housing (2), below the first bearing seat (11), and
- a groove (43) for leading gearbox oil from the first bearing seat (11) to the second bearing seat (35) is arranged in the first bearing seat (11).

11. Gearbox according to claim 10, wherein said groove (43) for leading gearbox oil from the first bearing seat (11) to the second bearing seat (35) comprises:
- a first section (43a), extending in a radial direction over said supporting surface (14) in the first bearing seat (11),
- a second section (43b), connected with the first section (43a), extending axially along the internal wall (12) of the first bearing seat (11), and
- a third section (43c) connected with the second section (43b), extending radially over the edge surface (28) of the first bearing seat (11), facing the mounting plate (16).

12. Gearbox according to claim 10 or 11 in combination with claim 4, wherein said groove (43) for leading gearbox oil from the first bearing seat (11) to the second bearing seat (35) is connected to said compartment (33) at the bottom of the first bearing seat (11), in order to lead gearbox oil from such a compartment (33) to the second bearing seat (35).

13. Gearbox according to any of claims 10-12, wherein the rolling bearing (36) arranged in the second bearing seat (35) constitutes a bearing for a countershaft of the gearbox.

14. Gearbox according to any of claims 1-13, wherein the mounting plate (16) is made of metal, preferably steel.

15. Gearbox according to any of claims 1-14, wherein said reservoir (25) is open at the top.

## Patentansprüche

1. Getriebe, mit:
- einem Getriebegehäuse (2), vorzugsweise bestehend aus Aluminium,
- einer horizontal verlaufenden, drehbaren Welle (4),
- einem Wälzlager (6), mit dem die Welle (4) drehbar in dem Getriebegehäuse (2) angebracht ist und das aufweist:
▪ einen Außenring (7) des Lagers (6), der in einen Lagersitz (11) für das Wälzlager (6) eingebaut ist, wobei der Lagersitz (11) in dem Getriebegehäuse (2) angeordnet ist, wobei ein solcher Außenring (7) des Lagers an einem ersten axialen Ende eine erste Randfläche (13), die an einer Lagerfläche (14) in dem Lagersitz (11) anliegt, und eine zweite Randfläche (15) an einem entgegengesetzten zweiten axialen Ende aufweist,
▪ einen Innenring (8) des Lagers (6), der an der Welle (4) angebracht ist, und
▪ mehrere zwischen dem Außenring (7) des Lagers und dem Innenring (8) des Lagers angeordnete Wälzkörper (9),
wobei
- eine Befestigungsplatte (16) an der zweiten Randfläche (15) des Lageraußenrings anliegt und auf das Getriebegehäuse (2) geschraubt ist, um so den Außenring (7) des Lagers zwischen der Befestigungsplatte (6) und der Lagerfläche (14) in dem ersten Lagersitz (11) eingespannt zu halten,
- ein Behälter (25) zur Aufnahme von Getriebeöl auf der Außenseite und oberhalb des Lagersitzes (11) im Getriebegehäuse (2) angeordnet ist, wobei die Befestigungsplatte (16) eine Stirnwand (26) eines solchen Behälters (25) bildet, und
- eine Nut (32) zum Leiten von Getriebeöl aus dem Behälter (25) in den Lagersitz (11) in dem Lagersitz angeordnet ist.

2. Getriebe nach Anspruch 1, wobei der Lagersitz (11) eine der Befestigungsplatte (16) zugewandte Randfläche (28) aufweist, wobei die Befestigungsplatte (16) eng an einer solchen Randfläche (28) anliegt.

3. Getriebe nach Anspruch 2, wobei die Nut (32) aufweist:
- einen ersten Abschnitt (32a), der in einer Radialrichtung über die vorgenannte Randfläche (28) des ersten Lagersitzes (11) verläuft,
- einen zweiten Abschnitt (32b), der mit dem ersten Abschnitt (32a) verbunden ist und axial entlang der Innenwand (12) des ersten Lagersitzes (11) verläuft, und
- einen dritten Abschnitt (32c), der mit dem zweiten Abschnitt (32b) verbunden ist und radial über die vorgenannte Lagerfläche (14) in dem ersten Lagersitz (11) verläuft.

4. Getriebe nach einem der Ansprüche 1 bis 3, wobei die Nut (32) mit einer Kammer (33) für Getriebeöl am Grund des Lagersitzes (11) verbunden ist, um Getriebeöl aus dem Behälter (25) zu einer solchen Kammer (33) zu leiten.

5. Getriebe nach einem der Ansprüche 1 bis 4, wobei die Welle (4) eine Eingangswelle des Getriebes (1) bildet.

6. Getriebe nach einem der Ansprüche 1 bis 5, wobei das Wälzlager (6) ein Kegelrollenlager ist.

7. Getriebe nach einem der Ansprüche 1 bis 6, wobei die Befestigungsplatte (16) axial federnd nachgiebige Befestigungsabschnitte (23) aufweist, über die die Befestigungsplatte (16) an dem Außenring (7) des Lagers anliegt und die in Umfangsrichtung um die zweite Randfläche (15) des Lageraußenrings verteilt sind.

8. Getriebe nach Anspruch 7, wobei die Befestigungsabschnitte (23) der Befestigungsplatte (16) zur zweiten Randfläche (15) hin vorgespannt sind, um den Außenring (7) des Lagers zwischen der Befestigungsplatte (16) und der Lagerfläche (14) in dem Lagersitz (11) vorgespannt zu halten unter Einwirkung einer durch die Befestigungsabschnitte (23) der Befestigungsplatte ausgeübten Federkraft.

9. Getriebe nach Anspruch 7 oder 8, wobei die Befestigungsplatte (16) einen ringförmigen Basisabschnitt (20) aufweist, mittels dessen die Befestigungsplatte (16) auf das Getriebegehäuse (2) geschraubt ist, wobei die Befestigungsabschnitte (23) fest mit dem Basisabschnitt (20) verbunden sind und sich von dem Basisabschnitt (20) radial einwärts erstrecken.

10. Getriebe nach einem der Ansprüche 1 bis 9, wobei:
- der Lagersitz (11) einen ersten Lagersitz des Getriebegehäuses (2) bildet, wobei ein zweiter Lagersitz (35) für ein Wälzlager (36) innerhalb des Getriebegehäuses (2) unterhalb des ersten Lagersitzes (11) angeordnet ist, und
- eine Nut (43) zum Leiten von Getriebeöl aus dem ersten Lagersitz (11) zum zweiten Lagersitz (35) in dem ersten Lagersitz (11) angeordnet ist.

11. Getriebe nach Anspruch 10, wobei die Nut (43) zum Leiten von Getriebeöl aus dem ersten Lagersitz (11) zu dem zweiten Lagersitz (35) aufweist:
- einen ersten Abschnitt (43a), der in einer Radialrichtung über die Lagerfläche (14) in dem ersten Lagersitz (11) verläuft,
- einen zweiten Abschnitt (43b), der mit dem ersten Abschnitt (43a) verbunden ist und axial über die Innenwand (12) des ersten Lagersitzes (11) verläuft, und
- einen dritten Abschnitt (43c), der mit dem zweiten Abschnitt (43b) verbunden ist und radial über die Randfläche (28) des ersten Lagersitzes (11) der Befestigungsplatte (16) zugewandt verläuft.

12. Getriebe nach Anspruch 10 oder 11 in Kombination mit Anspruch 4, wobei die Nut (43) zum Leiten von Getriebeöl aus dem ersten Lagersitz (11) zum zweiten Lagersitz (35) mit der Kammer (33) am Grund des ersten Lagersitzes (11) verbunden ist, um Getriebeöl aus einer solchen Kammer (33) zum zweiten Lagersitz (35) zu leiten.

13. Getriebe nach einem der Ansprüche 10 bis 12, wobei das in dem zweiten Lagersitz (35) angeordnete Wälzlager (36) ein Lager für eine Vorgelegewelle eines Getriebes bildet.

14. Getriebe nach einem der Ansprüche 1 bis 13, wobei die Befestigungsplatte (16) aus Metall besteht, vorzugsweise aus Stahl.

15. Getriebe nach einem der Ansprüche 1 bis 14, wobei der Behälter (25) an der Oberseite offen ist.

## Revendications

1. Boîte de vitesses comprenant :
- un boîtier de boîte de vitesses (2), de préférence fabriqué en aluminium ;
- un arbre rotatif (4), s'étendant horizontalement ;
- un palier à roulement (6), par lequel ledit arbre (4) est monté de manière rotative dans le boîtier de boîte de vitesses (2), et qui comprend :
• un anneau extérieure (7) du palier (6), monté dans un siège de palier (11) pour le palier à roulement (6), le siège de palier (11) étant disposé dans le boîtier de boîte de vitesses (2), dans laquelle une telle anneau extérieure (7) des caractéristiques de palier, à une première extrémité axiale, une première surface de bord (13), orientée contre une surface de support (14) dans le siège de palier (11), et une deuxième surface de bord (15) à une deuxième extrémité axiale opposée,
• un anneau intérieur (8) du palier (6) fixé à ledit arbre (4), et
• plusieurs corps de roulement (9) disposés entre l'anneau extérieur du palier (7) et l'anneau intérieur du palier (8) ;
dans laquelle :
- une plaque de montage (16) contre la deuxième surface de bord (15) de l'anneau extérieur du palier et vissée sur le boîtier de boîte de vitesses (2) afin d'ainsi maintenir l'anneau extérieur (7) du palier sollicité entre la plaque de montage (16) et ladite surface de support (14) dans le premier siège de palier (11),
- un réservoir (25) pour la réception d'huile de boîte de vitesses est disposé dans le boîtier de boîte de vitesses (2), à l'extérieur et au-dessus du siège de palier (11), dans lequel la plaque de montage (16) forme une paroi d'extrémité (26) d'un tel réservoir (25), et
- une rainure (32) pour diriger l'huile de boîte de vitesses du réservoir (25) dans le siège de palier (11) est disposée dans le siège palier.

2. Boîte de vitesses selon la revendication 1, dans laquelle le siège de palier (11) comporte une surface de bord (28) face à la plaque de montage (16), dans laquelle la plaque de montage (16) est ajustée contre une telle surface de bord (28).

3. Boîte de vitesses selon la revendication 2, dans laquelle ladite rainure (32) comprend :
- une première section (32a), s'étendant dans une direction radiale sur la surface de bord mentionnée ci-dessus (28) du premier siège de palier (11),
- une deuxième section (32b), reliée à la première section (32a), s'étendant axialement le long de la paroi interne (12) du premier siège de palier (11), et
- une troisième section (32c) reliée à la deuxième section (32b), s'étendant radialement sur la surface de support mentionnée ci-dessus (14) dans le premier siège de palier (11).

4. Boîte de vitesses selon l'une quelconque des revendications 1 à 3, dans laquelle ladite rainure (32) est reliée à un compartiment (33) pour l'huile de boîte de vitesses au fond du siège de palier (11), afin de diriger l'huile de boîte de vitesses dudit réservoir (25) vers un tel compartiment (33).

5. Boîte de vitesses selon l'une quelconque des revendications 1 à 4, dans laquelle ledit arbre (4) constitue un arbre d'entrée de la boîte de vitesses (1).

6. Boîte de vitesses selon l'une quelconque des revendications 1 à 5, dans laquelle ledit palier à roulement (6) est un palier à roulement conique.

7. Boîte de vitesses selon l'une quelconque des revendications 1 à 6, dans laquelle la plaque de montage (16) comprend des sections de montage axiales résilientes (23), par lesquelles la plaque de montage (16) vient en butée contre l'anneau extérieur (7) du palier, et qui sont distribuées de manière circonférentielle autour de la deuxième surface de bord (15) de l'anneau extérieur du palier.

8. Boîte de vitesses selon la revendication 7, dans laquelle lesdites sections de montage (23) de la plaque de montage (16) sont sollicitées vers la deuxième surface de bord (15), afin de maintenir l'anneau extérieur (7) du palier sollicité entre la plaque de montage (16) et ladite surface de support (14) dans le siège palier (11), sous l'impact d'une force résiliente exercée par les sections de montage de la plaque de montage (23).

9. Boîte de vitesses selon la revendication 7 ou 8, dans laquelle la plaque de montage (16) comprend une section de base annulaire (20), par laquelle la plaque de montage (16) est vissée sur le boîtier de boîte de vitesses (2), dans laquelle lesdites sections de montage (23) sont reliées de manière fixe à la section de base (20) et s'étendent radialement à partir de la section de base (20).

10. Boîte de vitesses selon l'une quelconque des revendications 1 à 9, dans laquelle :
- ledit siège de palier (11) constitue un premier siège de palier du boîtier de boîte de vitesses (2), dans laquelle un deuxième siège de palier (35) pour un palier à roulement (36) est disposé à l'intérieur du boîtier de boîte de vitesses (2), sous le premier siège de palier (11), et
- une rainure (43) pour diriger l'huile de boîte de vitesses du premier siège de palier (11) au deuxième siège de palier (35) est agencée dans le premier siège de palier (11).

11. Boîte de vitesses selon la revendication 10, dans laquelle ladite rainure (43) pour diriger l'huile de boîte de vitesses du premier siège de palier (11) vers le deuxième siège de palier (35) comprend :
- une première section (43a), s'étendant dans une direction radiale sur ladite surface de support (14) dans le premier siège de palier (11),
- une deuxième section (43b), reliée à la première section (43a), s'étendant axialement le long de la paroi interne (12) du premier siège de palier (11), et
- une troisième section (43c) reliée à la deuxième section (43b), s'étendant radialement sur la surface de bord (28) du premier siège de palier (11), face à la plaque de montage (16).

12. Boîte de vitesses selon la revendication 10 ou 11 en combinaison avec la revendication 4, dans laquelle ladite rainure (43) pour diriger l'huile de boîte de vitesses du premier siège de palier (11) vers le deuxième siège de palier (35) est reliée audit compartiment (33) au fond du premier siège de palier (11), afin de diriger l'huile de boîte de vitesses d'un tel compartiment (33) au deuxième siège de palier (35).

13. Boîte de vitesses selon l'une quelconque des revendications 10 à 12, dans laquelle le palier à roulement (36) disposé dans le deuxième siège de palier (35) constitue un palier pour un arbre de renvoi de la boîte de vitesses.

14. Boîte de vitesses selon l'une quelconque des revendications 1 à 13, dans laquelle la plaque de montage (16) est fabriquée en métal, de préférence en acier.

15. Boîte de vitesses selon l'une quelconque des revendications 1 à 14, dans laquelle ledit réservoir (25) est ouvert en haut.
